# EUROPÄISCHE PATENTSCHRIFT

(11) **EP 4 582 321 B1**
(45) Veröffentlichungstag und Bekanntmachung des Hinweises auf die Patenterteilung: **02.09.2026**
(21) Anmeldenummer: 24221394.0
(22) Anmeldetag: 19.12.2024
(51) Int. Cl.: B60W 30/09

(54) **KOLLISIONSVERMEIDUNGSVERFAHREN UND MITTEL ZU DESSEN IMPLEMENTIERUNG**
COLLISION AVOIDANCE METHOD AND MEANS FOR IMPLEMENTING SAME
PROCÉDÉ D'ÉVITEMENT DE COLLISION ET MOYENS POUR SA MISE EN OEUVRE

(30) Priorität: 04.01.2024 DE 102024200061
(43) Veröffentlichungstag der Anmeldung: 09.07.2025
(73) Patentinhaber: Robert Bosch GmbH, 70442 Stuttgart (DE)
(72) Erfinder: Mittermayr, Thomas, 4101 Feldkirchen an der Donau (AT); Artner, Maximilian, 4063 Hörsching (AT); Glogger, Simon, 89284 Pfaffenhofen (DE); Schmid, Marc, 73345 Hohenstadt (DE)

(56) Entgegenhaltungen:
- JP-A- 2014 091 349
- US-A1- 2021 039 613
- US-A1- 2021 237 719

## Beschreibung

Die vorliegende Erfindung betrifft ein Kollisionsvermeidungsverfahren und Mittel zur Implementierung eines derartigen Verfahrens.

### Hintergrund

Fahrzeuge können zur Kollisionsvermeidung zur Durchführung von Kollisionsvermeidungsverfahren eingerichtet sein, die beispielsweise auf Kamera-, Ultraschall-, Radar- oder Lidartechnik basieren können.

Kollisionsvermeidungsverfahren sind insbesondere aus dem Bereich der Personenkraftwagen bekannt. Sie können jedoch, ggf. mit entsprechenden Anpassungen, auch bei mobilen Arbeitsmaschinen zum Einsatz kommen. Hier vorgeschlagene Ausgestaltungen können beide Einsatzgebiete betreffen. Ein Kollisionsvermeidungsverfahren ist aus dem Dokument US 2021/039613 A1 bekannt.

### Übersicht

Es werden ein Kollisionsvermeidungsverfahren und Mittel zu dessen Implementierung mit den Merkmalen der unabhängigen Patentansprüche vorgeschlagen. Vorteilhafte Ausgestaltungen sind Gegenstand der abhängigen Patentansprüche sowie der nachfolgenden Beschreibung.

Das vorgeschlagene Kollisionsvermeidungsverfahren umfasst ein Abbremsen eines Fahrzeugs während eines Abbremszeitraums, wenn ein kollisionsrelevantes Objekt in einem Kollisionsüberwachungsbereich erkannt wird, und ein bedingtes Freigeben einer Wiederbeschleunigung des Fahrzeugs während eines Freigabezeitraums nach dem Abbremszeitraum. Das Freigeben der Wiederbeschleunigung wird unter der Bedingung vorgenommen, dass das kollisionsrelevante Objekt als ein minderkritisches kollisionsrelevantes Objekt bestimmt wird, und eine Begrenzung der Wiederbeschleunigung zu Beginn des Freigabezeitraums wird zumindest dann vorgenommen, wenn das kollisionsrelevante Objekt weiterhin in dem Kollisionsüberwachungsbereich erkannt wird.

Durch das vorgeschlagene Verfahren wird, wie unten nochmals genauer ausgeführt, vermieden, dass es nach dem Ende eines Eingriffs zur Kollisionsvermeidung zu einem starken Wiederbeschleunigen und aufgrund dessen ggf. erneut zu einem entsprechenden Eingriff zur Kollisionsvermeidung kommt, was von einem Fahrer eines entsprechenden Fahrzeugs als unangenehm empfunden werden kann und für den Fahrer nicht unmittelbar nachvollziehbar ist. Wird das kollisionsrelevante Objekt nicht mehr in dem Kollisionsüberwachungsbereich erkannt, beispielsweise weil es sich herausbewegt hat, kann in Ausgestaltungen die volle Beschleunigung wieder freigegeben werden, was die Verfügbarkeit eines entsprechenden Fahrzeugs erhöht.

In einer Ausgestaltung des vorgeschlagenen Verfahrens kann die Begrenzung der Wiederbeschleunigung zu Beginn des Freigabezeitraums unter Verwendung eines Widerbeschleunigungsbegrenzungswerts vorgenommen werden, der während des Freigabezeitraums angehoben wird. Auf diese Weise kann sichergestellt werden, dass sich zu späteren Zeitpunkten, zu denen die erläuterten unerwünschten erneuten Eingriffe zur Kollisionsvermeidung nicht mehr zu erwarten sind, wieder zunehmende Beschleunigungen, bis hin zu einer Maximalbeschleunigung, zur Verfügung stehen.

In einer Ausgestaltung des vorgeschlagenen Verfahrens kann eine Zeit bis zu einer erwarteten Kollision ("Time to Collision", TTC) mit dem kollisionsrelevanten Objekt, prognostiziert werden, und ein kollisionsrelevantes Objekt kann als ein minderkritisches kollisionsrelevantes Objekt erkannt werden, wenn die prognostizierte Zeit bis zur Kollision oberhalb eines vorgegebenen Schwellwerts liegt. Auf diese Weise kann sichergestellt werden, dass das Verfahren auf solche kollisionsrelevanten Objekte beschränkt wird, für die eine Kollision nicht unmittelbar oder innerhalb eines kurzen Zeitraums zu erwarten ist.

In einer Ausgestaltung des vorgeschlagenen Verfahrens kann das Freigeben der Wiederbeschleunigung als Freigeben einer durch einen Fahrer des Fahrzeugs bedienten Beschleunigungsbedieneinheit oder eines Beschleunigungsanforderungssignals derselben vorgenommen werden. In Ausgestaltungen kann es sich bei der Beschleunigungsbedieneinheit um ein Fahrpedal bzw. sogenanntes Gaspedal handeln. Entsprechende Ausgestaltungen können vorteilhafterweise in bestehende Systeme integriert werden, die bereits eine Fahrpedalbegrenzung oder eine entsprechende Begrenzung eines Beschleunigungsanforderungssignals in einem anderen Kontext vorsehen.

In einer Ausgestaltung des vorgeschlagenen Verfahrens kann die Begrenzung der Wiederbeschleunigung zu Beginn des Freigabezeitraums auf Grundlage einer Geschwindigkeit des Fahrzeugs vorgenommen werden. Hierdurch kann insbesondere sichergestellt werden, dass die eingeleiteten Maßnahmen an die jeweilige Geschwindigkeit des Fahrzeugs angepasst sind.

In einer Ausgestaltung des vorgeschlagenen Verfahrens kann dieses in einer mobilen Arbeitsmaschine als dem Fahrzeug durchgeführt werden. Wie unten erläutert, sind insbesondere mobile Arbeitsmaschinen wie Radlader, Bagger, Stapler und dergleichen aufgrund des ggf. nicht einsehbaren Fahrwegs kollisionsgefährdet, so dass diese besonders von den vorgeschlagenen Maßnahmen profitieren können.

Das vorgeschlagene Kollisionsvermeidungssystem, das insbesondere in einem Fahrzeug, beispielsweise einer mobilen Arbeitsmaschine, implementiert sein kann und dieses bzw. diese als Teil des Systems umfassen kann, weist eine Steuereinheit auf, die zum Abbremsen eines Fahrzeugs während eines Abbremszeitraums eingerichtet ist, wenn ein kollisionsrelevantes Objekt in einem Kollisionsüberwachungsbereich erkannt wird, und die zum bedingten Freigeben einer Wiederbeschleunigung des Fahrzeugs während eines Freigabezeitraums nach dem Abbremszeitraum eingerichtet ist. Die Steuereinheit ist zum Freigeben der Wiederbeschleunigung des Fahrzeugs unter der Bedingung eingerichtet, dass das zunächst ohne oder mit entsprechender Prüfung als kritisch anzusehende kollisionsrelevante Objekt am Ende des Eingriffs zur Kollisionsvermeidung als minderkritisches kollisionsrelevantes Objekt bestimmt wird, und die Steuereinheit ist zum Begrenzen der Wiederbeschleunigung zu Beginn des Freigabezeitraums zumindest dann, wenn das kollisionsrelevante Objekt weiterhin in dem Kollisionsüberwachungsbereich erkannt wird, eingerichtet.

Zu weiteren Merkmalen und Vorteilen eines entsprechenden Kollisionsvermeidungssystems und unterschiedlichen Ausgestaltungen hiervon sei auf die obigen Erläuterungen betreffend das vorgeschlagene Kollisionsvermeidungsverfahren und seine Ausgestaltungen ausdrücklich verwiesen, da diese hierfür in gleicher Weise gelten.

Die vorgeschlagene Recheneinheit umfasst einen Prozessor, der so konfiguriert ist, dass er das vorgeschlagene Verfahren, insbesondere gemäß einer beliebigen der zuvor und nachfolgend erläuterten Ausgestaltungen, ausführt. Auch diese profitiert damit von den erläuterten Vorteilen des vorgeschlagenen Verfahrens und seiner Ausgestaltungen.

Entsprechendes gilt auch für das vorgeschlagene Computerprogramm, das Befehle umfasst, die bei der Ausführung des Computerprogramms durch einen Computer den Computer veranlassen, ein Kollisionsvermeidungsverfahren auszuführen, wie es zuvor in unterschiedlichen Ausgestaltungen erläutert wurde.

Für den vorgeschlagenen computerlesbaren Datenträger, auf dem ein entsprechendes Computerprogramm gespeichert ist, gilt im Wesentlichen dasselbe.

Die Implementierung des vorgeschlagenen Verfahrens oder seiner Ausgestaltungen in Form eines Computerprogramms oder Computerprogrammprodukts mit Programmcode zur Durchführung aller Verfahrensschritte ist besonders vorteilhaft, da dies besonders geringe Kosten verursacht, insbesondere wenn ein ausführendes Steuergerät noch für weitere Aufgaben genutzt wird und daher ohnehin vorhanden ist.

Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über geeignete Computernetze (Internet, Intranet, Cloud usw.) ist möglich.

### Figurenbeschreibung

Figur 1 zeigt ein Kollisionsvermeidungssystem in vereinfachter Darstellung.
Figur 2 veranschaulicht Geschwindigkeitsverläufe bei Kollisionsvermeidungssystemen.
Figur 3 zeigt Aspekte eines Kollisionsvermeidungssystems in vereinfachter Darstellung.
Figur 4 zeigt ein Kollisionsvermeidungsverfahren in vereinfachter Darstellung.

### Ausführungsformen

Die nachfolgend beschriebenen Ausführungsformen werden lediglich zu dem Zweck beschrieben, den Leser beim Verständnis der beanspruchten und zuvor erläuterten Merkmale zu unterstützen. Sie stellen lediglich repräsentative Beispiele dar und sollen hinsichtlich der Merkmale von vorgeschlagenen Ausgestaltungen nicht abschließend und/oder beschränkend betrachtet werden.

Es versteht sich, dass die zuvor und nachfolgend beschriebenen Vorteile, Ausführungsformen, Beispiele, Funktionen, Merkmale, Strukturen und/oder anderen Aspekte nicht als Beschränkungen des Umfangs der Erfindung, wie er in den Ansprüchen definiert ist, oder als Beschränkungen von Äquivalenten zu den Ansprüchen zu betrachten sind, und dass andere Ausführungsformen verwendet und Änderungen vorgenommen werden können, ohne vom Umfang der beanspruchten Erfindung abzuweichen.

Unterschiedliche Ausführungsformen können weitere zweckmäßige Kombinationen der beschriebenen Elemente, Komponenten, Merkmale, Teile, Schritte, Mittel usw. umfassen, aufweisen, aus ihnen bestehen oder im Wesentlichen aus ihnen bestehen, auch wenn solche Kombinationen hier nicht spezifisch beschrieben sind. Darüber hinaus kann die Offenbarung andere Erfindungen umfassen, die gegenwärtig nicht beansprucht sind, die aber in Zukunft beansprucht werden können, insbesondere wenn sie vom Umfang der unabhängigen Ansprüche umfasst sind.

Erläuterungen, die sich auf Vorrichtungen, Apparate, Anordnungen, Systeme usw. gemäß hier vorgeschlagenen Ausführungsformen beziehen, können auch für Verfahren, Prozesse, Methoden usw. gemäß den hier vorgeschlagenen Ausführungsformen gelten und umgekehrt. Gleiche, gleich wirkende, in ihrer Funktion einander entsprechende, baulich identisch oder vergleichbar aufgebaute Elemente sowie Verfahrensschritte usw. können in den Zeichnungen mit identischen Bezugszeichen angegeben sein.

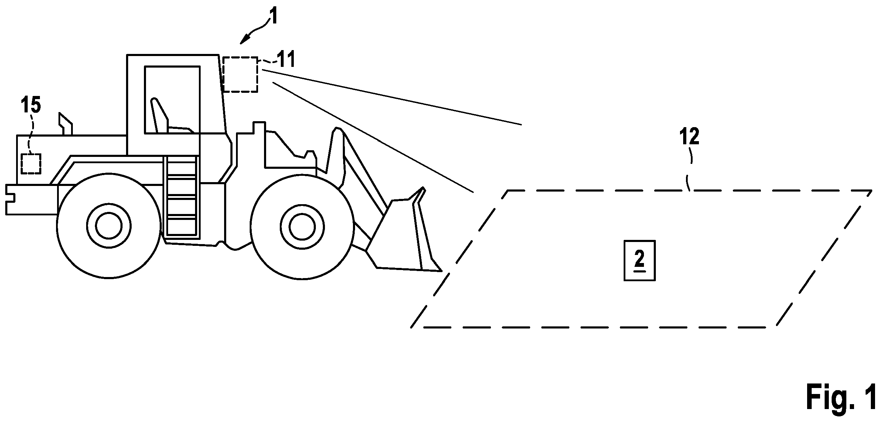

Es soll nun zunächst auf Figur 1 Bezug genommen werden, die ein Fahrzeug 1, hier eine in Form eines Radladers ausgebildete mobile Arbeitsmaschine zeigt.

Insbesondere Kollisionen mobiler Arbeitsmaschinen stellen für Mensch und Maschine ein erhebliches Risiko dar. Insbesondere bei eingeschränkter Sicht (verursacht z.B. durch eine beladene Schaufel an einem Radlader oder eine beladene Mulde an einem Dumper) kann es zu schweren Unfällen kommen. Systeme zur Vermeidung oder Mitigierung derartiger Kollisionen sind bekannt, und diese können beispielsweise Rückfahrkameras und Bird-Eye-View-Kameras zur besseren Rundumsicht, aber auch Systeme zur Kollisionswarnung und -vermeidung basierend auf Kamera-, Ultraschall-, Radar- oder Lidar-Technik umfassen. Diese können als Assistenzsysteme die Sicherheit des Maschinenbetriebes erhöhen. Bei Systemen beruhend auf Umfeldsensorik (z.B. Radar) wird vom Sensorsystem ein Hindernis (z.B. Person, Fahrzeug oder Wand) erkannt.

Das Fahrzeug 1 weist dazu eine Detektionsanordnung 11 auf, die hier gestrichelt veranschaulicht ist und hinsichtlich ihrer baulichen Ausgestaltung in keiner Weise beschränkt ist und beispielsweise am Fahrzeug 1 verteilte Sensoren und eine oder mehrere dezentrale, verteilte oder zentrale Auswerteeinheiten aufweisen kann. Die Detektionsanordnung 11 kann insbesondere Video-, Radar-, Lidar-, Ultraschall- oder Infrarotsensoren beliebiger Art, Kombination und Verschaltung aufweisen und/oder zur Kommunikation mit anderen Fahrzeugen eingerichtet sein, um Objekte 2 zu erkennen. Die Detektionsanordnung 11 erfasst einen Detektionsbereich 12, der hier ebenfalls gestrichelt veranschaulicht ist und einen Fahrweg des Fahrzeugs 1 umfassen oder diesen darstellen kann.

Eine entsprechende Detektionsanordnung 11 kann insbesondere dazu eingerichtet sein, die Zuordnung des Objekts 2 zu Objektklassen vorzunehmen. Auf diese Weise kann das Objekt 2 beispielsweise als ein nichtbelebtes Objekt 2, erkannt werden, oder aber als belebtes Objekt 2, beispielsweise als Mensch. Ausgestaltungen der vorliegenden Erfindung können eine entsprechende Klassifizierung umfassen oder nicht. Zuvor und nachfolgend ist von einem "kollisionsrelevanten" Objekt 2 die Rede, das sich von einem anderen, d.h. insbesondere einem nicht kollisionsrelevanten Objekt unterscheiden kann, und zwar beispielsweise bereits dadurch, dass es sich in dem Detektionsbereich 12 befindet.

Ein kollisionsrelevantes Objekt 2 kann sich von einem anderen Objekt dadurch unterscheiden, dass eine Kollision mit diesem unerwünschte Effekte, beispielsweise Beschädigungen an dem Fahrzeug 1 oder dem Objekt 2, nach sich zieht. Ein nicht kollisionsrelevantes Objekt kann beispielsweise dadurch gekennzeichnet sein, dass es zu klein ist oder sich flach auf dem Boden befindet, wie beispielsweise einem Gullydeckel einer Regenrinne oder auf der Straße befindlichem Sand der Fall. Kriterium für ein nicht kollisionsrelevantes Objekt ist, dass es bei einer Kollision keine negativen Effekte erwarten lässt. Ein Objekt 2 kann beispielsweise durch eine Benutzerdefinition oder Vorgabe in der Detektionsanordnung 11 als kollisionsrelevantes Objekt 2 gekennzeichnet, d.h. beispielsweise entsprechend klassifiziert, werden.

Die Erkennung von kollisionsrelevanten Objekten 2 kann in Abhängigkeit der Detektion durch unterschiedliche Sensorsysteme erfolgen. Je nachdem, ob ein Objekt 2 mittels eines Radar, Lidar- oder Videosensors oder von einer Kombination hieraus erkannt werden kann, können die Objekte 2 den Objektklassen zugeordnet werden.

Bekannte Systeme zur Kollisionsvermeidung, die beispielsweise unter Verwendung eines Steuergeräts 15 des Fahrzeugs 1 implementiert sein können, können aufgrund des übermittelten Abstandes zum Objekt 2 und dessen Relativgeschwindigkeit eine Zeit bis zur Kollision ("Time to Collision", TTC) ermitteln. Derartige Systeme sind aus dem Automobilbereich bereits bekannt und kommen mit entsprechenden Anpassungen auch im Bereich mobiler Arbeitsmaschinen zum Einsatz.

Die TTC, vorliegend auch "Zeit bis zu einer (erwarteten) Kollision" genannt, bezeichnet die geschätzte Zeit, die bis zum Eintreten einer Kollision verbleibt, wenn zwei Objekte, wie Fahrzeuge beliebiger Art, ihren aktuellen Kurs und ihre aktuelle Geschwindigkeit beibehalten. Diese Berechnung ist ein entscheidender Bestandteil vieler moderner Sicherheitssysteme, die darauf abzielen, Kollisionen zu vermeiden. Selbstverständlich kann dabei auch eine Zeit bis zum Eintreten einer Kollision zwischen einem bewegten Fahrzeug und einem unbewegten Objekt entsprechend bestimmt werden.

Die TTC wird üblicherweise berechnet, indem die Distanz zwischen den beiden betrachteten Objekten (oder einem Fahrzeug und einem anderen Objekt) durch die Relativgeschwindigkeit geteilt wird. Dies setzt voraus, dass sich beide Objekte geradlinig und mit konstanter Geschwindigkeit bewegen. Bei anderen Bewegungstrajektorien und/oder variierenden Geschwindigkeiten können entsprechend angepasste Berechnungsmethoden verwendet werden, die jedoch an sich bekannt sind.

TTC-Systeme werden in verschiedenen Bereichen der Technik eingesetzt, darunter im Automobilbereich (z.B. bei Fahrerassistenzsystemen), in der Luftfahrt (d.h. in Kollisionsvermeidungssystemen für Flugzeuge) und in der Robotik (z.B. bei autonomen Fahrzeugen). Auf Grundlage der TTC können unterschiedliche Warnungen und/oder Aktionen eingeleitet werden. Wenn die berechnete TTC einen bestimmten Schwellwert unterschreitet, was auf eine bevorstehende Kollision hindeutet, können Warnsysteme den Fahrer oder Operator alarmieren, so dass dieser einen kollisionsvermeidenden Eingriff einleiten kann, oder automatische Aktionen einleiten, wie z.B. das Auslösen von Bremsen. Letzteres wird insbesondere dann vorgenommen, wenn keine ausreichende Zeit für einen entsprechenden Benutzereingriff verbleibt.

Die Genauigkeit der TTC-Berechnung hängt von der Genauigkeit der Eingabedaten ab, wie z.B. der Position und Geschwindigkeit der Objekte. Außerdem kann die TTC in Situationen mit komplexen Bewegungsmustern oder bei plötzlichen Änderungen in Geschwindigkeit oder Richtung weniger zuverlässig sein. Die vorliegende Erfindung ermöglicht es in ihren Ausgestaltungen, dies zu berücksichtigen.

Die Umsetzung entsprechender Verfahren umfasst typischerweise einen oder mehrere Sensoren (z.B. Radar), Inertialsensorik zur Übermittlung der Eigenbewegungen (Gierraten) an die zugehörigen Radarsensoren der Detektionsanordnung 11 sowie ein Steuergerät 15 des Fahrzeugs 1 zur Auswertung der von den Sensoren erkannten Objekte 2 und der Berechnung der zur Auslösung der Warnung bzw. für den Eingriff relevanten Größen.

Wird in Kollisionsvermeidungsverfahren von einem Sensorsystem oder einer entsprechenden Detektionsanordnung 11 ein Hindernis, beispielsweise eine Person, ein Fahrzeug oder eine Wand, erkannt, kann aufgrund des erfassten Abstandes zum Hindernis und dessen Relativgeschwindigkeit die TTC ermittelt werden. Ferner kann auf Grundlage einer erwarteten Reaktionszeit des Fahrers unterschieden werden, ob noch genug Zeit für einen Bremseingriff des Fahrers bleibt oder nicht. In ersterem Fall kann der Fahrer lediglich gewarnt werden, im letzteren Fall kann ein automatisierter Bremseingriff durch das Fahrzeug erfolgen.

Das reale Verzögerungsverhalten des Fahrzeugs 1 bei einem Eingriff zu Kollisionsvermeidung ist nicht in jeder Situation bekannt. In der Praxis wird das reale Verzögerungsverhalten beeinflusst durch Einflussfaktoren wie Fahrbahnsteigung und Untergrundbeschaffenheit, auch z.B. eine nasse oder schneebedeckte Fahrbahn, die Masse des Fahrzeugs 1 (also Leermasse mit oder ohne vorhandene Zuladung), ein maschinenspezifisches Verzögerungsverhalten (hydrostatisch, abweichendes Verhalten in bestimmten Betriebsmodi).

Die genannten Einflussfaktoren können dazu führen, dass das Fahrzeug 1 in bestimmten Situationen bei einem Eingriff zur Kollisionsvermeidung stärker als vorhergesagt verzögert. Die daraus resultierende, deutlich reduzierte Fahrzeuggeschwindigkeit kann dazu führen, dass das kollisionsrelevante Objekt 2 die kritische vorhergesagte Zeit zur Kollision wieder überschreitet und der Eingriff zur Kollisionsvermeidung zurückgenommen wird. Bei einer erneuten Beschleunigung des Fahrzeugs 1 startet die Schleife aus Eingriff zur Kollisionsvermeidung und Zurücknehmen des Eingriffs durch die unerwartet hohe Fahrzeugverzögerung erneut. Dieses Fahrzeugverhalten ist vor allem für den Fahrer unangenehm und nicht nachvollziehbar. Zudem kann eine starke Wiederbeschleunigung des Fahrzeugs nach einem Eingriff zur Kollisionsvermeidung bei minderkritischen Objekten im überwachten Bereich dazu führen,
dass ein erneuter Eingriff zur Kollisionsvermeidung aufgrund der Trägheit des hydrostatischen Fahrantriebs nicht rechtzeitig erfolgt und daraus eine Kollision resultiert.

Es sind daher zwei Teilprobleme zu lösen, nämlich (1) das Erkennen von minderkritischen Objekten im überwachten Bereich am zeitlichen Ende eines Eingriffs zur Kollisionsvermeidung, und (2) eine Limitierung und Freigabe des Fahrpedals für den in (1) beschriebenen Fall, um eine starke Wiederbeschleunigung zu vermeiden.

Ausgestaltungen der vorliegenden Erfindung lösen diese Probleme mit dem vorgeschlagenen Kollisionsvermeidungsverfahren. Das Abbremsen des Fahrzeugs 1 erfolgt dabei während eines Abbremszeitraums, wenn ein kollisionsrelevantes Objekt 2 in einem Kollisionsüberwachungsbereich 3 erkannt wird. Nun erfolgt jedoch in dem vorgeschlagenen Verfahren nur ein bedingtes Freigeben einer Wiederbeschleunigung des Fahrzeugs 1 während eines Freigabezeitraums nach dem Abbremszeitraum.

Die limitierte Freigabe der Wiederbeschleunigung wird in dem vorgeschlagenen Verfahren nur dann vorgenommen, wenn das kollisionsrelevante Objekt 2 als ein minderkritisches kollisionsrelevantes Objekt 2 (siehe hierzu oben) bestimmt wird, und eine Begrenzung der Wiederbeschleunigung zu Beginn des Freigabezeitraums wird zumindest dann vorgenommen, wenn das kollisionsrelevante Objekt 2 weiterhin in dem Kollisionsüberwachungsbereich 3 erkannt wird.

Das vorgeschlagene Verfahren umfasst dabei ein System bzw. Mittel zur Erkennung minderkritischer Objekte 2 im Erfassungsbereich 12 am Ende eines Eingriffs zur Kollisionsvermeidung auf Grundlage der TTC. Wird ein Objekt entsprechend erkannt, wird in dem vorgeschlagenen Verfahren insbesondere passend zur aktuellen Geschwindigkeit des Fahrzeugs 1 eine initiale Limitierung der Beschleunigung, beispielsweise einer Fahrpedalstellung, vorgegeben. Von dieser initialen Limitierung des Fahrpedals ausgehend kann das Fahrpedal oder eine andere Beschleunigungsbedieneinrichtung beispielsweise über eine Rampe freigegeben werden. Dadurch wird in entsprechenden Ausgestaltungen sowohl ein nicht notwendiges, weiteres Verzögern des Fahrzeugs 1, als auch eine in der beschriebenen Situation ungewollt starke Beschleunigung des Fahrzeugs 1 verhindert.

Mit anderen Worten umfassen Ausgestaltungen der vorliegenden Erfindung die Klassifizierung eines Objekts als "kritisch" oder "minderkritisch" insbesondere ausschließlich über die TTC. Eine Differenzierung zwischen Arten von Objekten wie Menschen, Fahrzeugen, Tieren und dergleichen ist nicht erfindungswesentlich, kann aber in Ausgestaltungen der Erfindung gleichwohl zusätzlich vorgesehen sein.

Minderkritische Objekte können also alle Kriterien eines kritischen Objekts erfüllen, besitzen aber eine im aktuellen Zustand noch zu hohe TTC, um eine Reaktion auszulösen.

Minderkritische Objekte werden aber mit hoher Wahrscheinlichkeit zu einem späteren Zeitpunkt in kritische Objekte übergehen, wenn deren TTC weiter sinkt.

Ziel ist nun eine "Vorspannung" des Systems über eine stufenweise Freigabe (Rampe) der Wiederbeschleunigung im Falle der Präsenz eines minderkritischen Objekts am Ende eines Eingriffs zur Kollisionsvermeidung, um eine starke Beschleunigung zu verhindern. Damit wird, wie bereits ausgeführt, bewirkt, dass die Wahrscheinlichkeit für eine Kollision mit dem minderkritischen Objekt durch eine starke Wiederbeschleunigung reduziert wird, und ein wiederholtes, für den Fahrer lästiges und nicht nachvollziehbares Springen zwischen einem Eingriff zur Kollisionsvermeidung und der Freigabe des Fahrpedals wird verhindert.

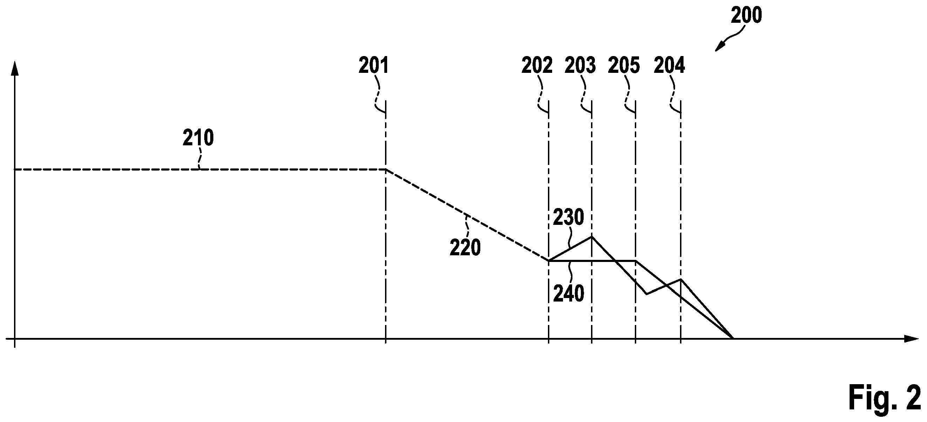

Dies wird nochmals anhand der Figur 2 veranschaulicht, die Geschwindigkeitsverläufe von Kollisionsvermeidungssystemen gemäß einer nicht erfindungsgemäßen Ausgestaltung und einer hier vorgeschlagenen Ausgestaltung in einem gemeinsamen Diagramm 200 veranschaulicht sind, in dem eine Geschwindigkeit auf einer Vertikalachse gegenüber einer Zeit auf der Horizontalachse aufgetragen ist.

Bis zu einem Zeitpunkt 201 fährt dabei ein Fahrzeug 1 in der nicht erfindungsgemäßen Ausgestaltung und einer hier vorgeschlagenen Ausgestaltung mit einer konstanten Geschwindigkeit, wie mit 210 veranschaulicht. Ab dem Zeitpunkt 201 bis zu einem Zeitpunkt 202, d.h. einem Abbremszeitraum, erfolgt ein Abbremsen, das ebenfalls in der nicht erfindungsgemäßen Ausgestaltung und einer hier vorgeschlagenen Ausgestaltung mit einer identischen Verzögerung erfolgen kann, wie mit 220 veranschaulicht.

In einer nicht erfindungsgemäßen Ausgestaltung wird nun nach dem Abbremszeitraum, d.h. ab dem Zeitpunkt 202, wieder die volle Beschleunigung freigegeben, so dass, wie mit 230 dargestellt, ab einem Zeitpunkt 203 ein erneuter Bremseingriff erfolgt. Dieser Zyklus wird ein weiteres mal durchlaufen, d.h. die Beschleunigung wird wieder freigegeben und zu einem Zeitpunkt 204 erfolgt erneut ein Bremseingriff.

In einer hier vorgeschlagenen Ausgestaltung wird stattdessen nach dem Abbremszeitraum, d.h. ab dem Zeitpunkt 202, noch nicht die volle Beschleunigung wieder freigegeben, so dass, wie mit 240 dargestellt, zunächst höchstens ein sanftes Beschleunigen erfolgt. Ab einem Zeitpunkt 205 erfolgt erneut ein Bremseingriff bis zum Stillstand.

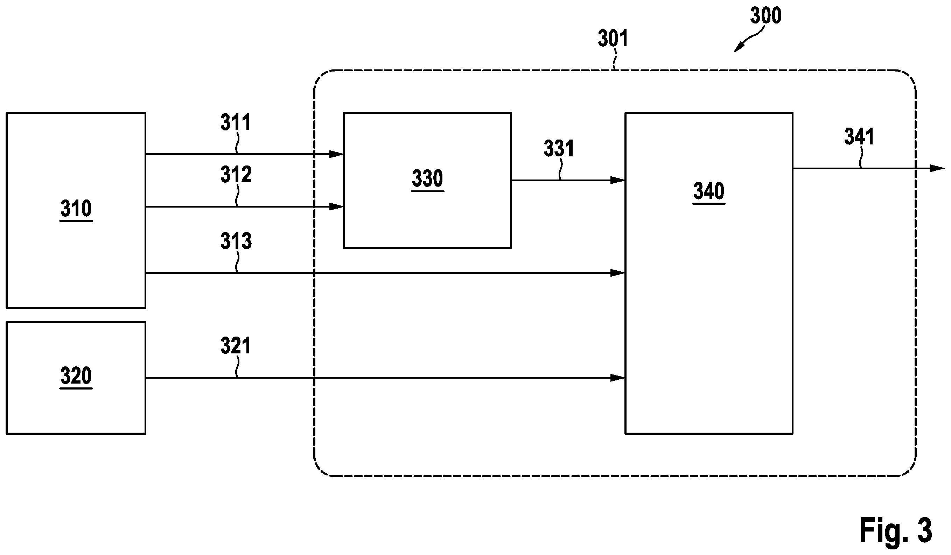

Figur 3 zeigt Aspekte eines Kollisionsvermeidungssystems in vereinfachter Darstellung in Form eines Blockschaltbilds 300. Ein Kollisionsvermeidungssystem 310 gibt dabei geeignete Signale 311 und 312 aus, die einerseits einen Eingriff zur Kollisionsvermeidung einleiten und andererseits ein Objekt 2 als minderkritisches Objekt 2 kennzeichnen. Diese werden an einen Block 301 übermittelt, der einen Block 330 zur Zustandserkennung der Limitierung eines Fahrpedals umfasst. Dieser kann einen Limitierungszustand in Form eines Signals 331 an einen Block 340 zur Limitierung bzw. Freigabe des Fahrpedals umfassen, das ein Signal 341 ausgeben kann. Die Limitierung bzw. Freigabe kann auf Grundlage eines Signals 313 des Kollisionsvermeidungssystems 310 erfolgen, das angeben kann, dass das Objekt 2 sich noch in dem Überwachungsbereich befindet. Ein Signal 321, beispielsweise eines CAN-Busses 320, kann die Fahrzeuggeschwindigkeit übermitteln.

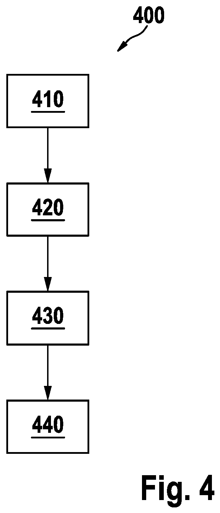

Figur 4 zeigt ein Kollisionsvermeidungsverfahren in vereinfachter Darstellung. Das Verfahren ist insgesamt mit 400 bezeichnet.

In einem Verfahrensschritt 410, in dem sich ein Fahrzeug 1 beispielsweise mit einer bestimmten Geschwindigkeit vorwärts bewegt, wird dabei ein Objekt 2 in einem Kollisionsüberwachungsbereich 12 erkannt.

In Reaktion wird in einem Verfahrensschritt 420 ein Abbremsen des Fahrzeugs 1 eingeleitet, und zwar für einen vorbestimmten Zeitraum, hier als Abbremszeitraum bezeichnet, der auf Grundlage beispielsweise einer vorbestimmten Zeit bis zur Kollision definiert wird.

Nach dem Ende des Abbremszeitraums wird in einem Verfahrensschritt 430 eine Wiederbeschleunigung des Fahrzeugs 1 bedingt freigegeben, wobei das Freigeben 430 der Wiederbeschleunigung unter der Bedingung vorgenommen wird, dass das kollisionsrelevante Objekt 2 nun, und zwar insbesondere auf Grundlage der TTC wie oben erläutert, als ein minderkritisches kollisionsrelevantes Objekt 2 bestimmt wird, und eine Begrenzung der Wiederbeschleunigung zu Beginn des Freigabezeitraums zumindest dann vorgenommen wird, wenn das kollisionsrelevante Objekt 2 weiterhin in dem Kollisionsüberwachungsbereich 3 erkannt wird.

Die Begrenzung der Wiederbeschleunigung zu Beginn eines entsprechenden Freigabezeitraums kann unter Verwendung eines Widerbeschleunigungsbegrenzungswerts vorgenommen werden, der während des Freigabezeitraums angehoben wird, bis die Begrenzung in einem Schritt 440 aufgehoben ist, sich das Objekt 2 aus dem Kollisionsüberwachungsbereich 3 bewegt hat, oder das Fahrzeug 1 zum Stillstand gekommen ist.

## Patentansprüche

1. Kollisionsvermeidungsverfahren (400), das umfasst:
Abbremsen (420) eines Fahrzeugs (1) während eines Abbremszeitraums, wenn ein kollisionsrelevantes Objekt (2) in einem Kollisionsüberwachungsbereich (12) erkannt wird, und bedingtes Freigeben (430) einer Wiederbeschleunigung des Fahrzeugs (1) während eines Freigabezeitraums nach dem Abbremszeitraum,
wobei das Freigeben (430) der Wiederbeschleunigung unter der Bedingung vorgenommen wird, dass das kollisionsrelevante Objekt (2) als ein minderkritisches kollisionsrelevantes Objekt (2) bestimmt wird, **dadurch gekennzeichnet, dass**
eine Begrenzung der Wiederbeschleunigung zu Beginn des Freigabezeitraums zumindest dann vorgenommen wird, wenn das kollisionsrelevante Objekt (2) weiterhin in dem Kollisionsüberwachungsbereich (3) erkannt wird.

2. Kollisionsvermeidungsverfahren (400) nach Anspruch 1,
wobei die Begrenzung der Wiederbeschleunigung zu Beginn des Freigabezeitraums unter Verwendung eines Widerbeschleunigungsbegrenzungswerts vorgenommen wird, der während des Freigabezeitraums angehoben wird.

3. Kollisionsvermeidungsverfahren (400) nach einem Ansprüche 1 oder 2,
wobei eine Zeit bis zu einer Kollision mit dem kollisionsrelevanten Objekt (2) prognostiziert und das kollisionsrelevante Objekt (2) als ein minderkritisches kollisionsrelevantes Objekt (2) erkannt wird, wenn die prognostizierte Zeit bis zur Kollision oberhalb eines Schwellwerts liegt.

4. Kollisionsvermeidungsverfahren (400) nach einem der vorstehenden Ansprüche,
wobei das Freigeben (120) der Wiederbeschleunigung als Freigeben (120) einer durch einen Fahrer des Fahrzeugs bedienten Beschleunigungsbedieneinheit oder eines Beschleunigungsanforderungssignals vorgenommen wird.

5. Kollisionsvermeidungsverfahren (400) nach einem der vorstehenden Ansprüche,
wobei die Begrenzung der Wiederbeschleunigung zu Beginn des Freigabezeitraums auf Grundlage einer Geschwindigkeit des Fahrzeugs vorgenommen wird.

6. Kollisionsvermeidungsverfahren (110) nach einem der vorstehenden Ansprüche, das in einer mobilen Arbeitsmaschine als dem Fahrzeug (1) durchgeführt wird.

7. Recheneinheit, insbesondere Steuergerät (15), umfassend einen Prozessor, der so konfiguriert ist, dass er das Verfahren nach einem der vorstehenden Ansprüche ausführt.

8. Computerprogramm umfassend Befehle, die bei der Ausführung des Computerprogramms durch einen Computer den Computer veranlassen, das Kollisionsvermeidungsverfahren (400) nach Anspruch 1 bis 6 auszuführen.

9. Computerlesbarer Datenträger, auf dem das Computerprogramm nach Anspruch 8 gespeichert ist.

## Claims

1. Collision avoidance method (400), comprising:
braking (420) a vehicle (1) during a braking period when a collision-relevant object (2) is detected in a collision monitoring area (12),
and conditionally releasing (430) a re-acceleration of the vehicle (1) during a release period after the braking period,
wherein the releasing (430) of the re-acceleration is performed under the condition that the collision-relevant object (2) is determined to be a less critical collision-relevant object (2), **characterized in that**
a limitation of the re-acceleration at the beginning of the release period is performed at least when the collision-relevant object (2) continues to be detected in the collision monitoring area (3).

2. Collision avoidance method (400) according to claim 1,
wherein the limitation of the re-acceleration at the beginning of the release period is performed using a re-acceleration limitation value which is increased during the release period.

3. Collision avoidance method (400) according to claim 1 or 2,
wherein a time to a collision with the collision-relevant object (2) is predicted and the collision-relevant object (2) is detected as a less critical collision-relevant object (2) when the predicted time to the collision is above a threshold value.

4. Collision avoidance method (400) according to any one of the preceding claims,
wherein the releasing (120) of the re-acceleration is performed as releasing (120) of an acceleration control unit operated by a driver of the vehicle or of an acceleration request signal.

5. Collision avoidance method (400) according to any one of the preceding claims,
wherein the limitation of the re-acceleration at the beginning of the release period is performed on the basis of a speed of the vehicle.

6. Collision avoidance method (110) according to any one of the preceding claims, which is carried out in a mobile working machine as the vehicle (1).

7. Computing unit, in particular control unit (15), comprising a processor configured such that it executes the method according to any one of the preceding claims.

8. Computer program comprising instructions which, when the computer program is executed by a computer, cause the computer to execute the collision avoidance method (400) according to claims 1 to 6.

9. Computer-readable medium, on which the computer program according to claim 8 is stored.

## Revendications

1. Procédé d'évitement de collision (400), comprenant :
le freinage (420) d'un véhicule (1) pendant une période de freinage lorsqu'un objet pertinent pour une collision (2) est détecté dans une zone de surveillance de collision (12),
et la libération conditionnelle (430) d'une réaccélération du véhicule (1) pendant une période de libération après la période de freinage,
dans lequel la libération (430) de la réaccélération est effectuée à la condition que l'objet pertinent pour une collision (2) soit déterminé comme étant un objet pertinent pour une collision moins critique (2), **caractérisé en ce que**
une limitation de la réaccélération au début de la période de libération est effectuée au moins lorsque l'objet pertinent pour une collision (2) continue d'être détecté dans la zone de surveillance de collision (3).

2. Procédé d'évitement de collision (400) selon la revendication 1,
dans lequel la limitation de la réaccélération au début de la période de libération est effectuée en utilisant une valeur de limitation de réaccélération qui est augmentée pendant la période de libération.

3. Procédé d'évitement de collision (400) selon la revendication 1 ou 2,
dans lequel un temps jusqu'à une collision avec l'objet pertinent pour une collision (2) est prédit et l'objet pertinent pour une collision (2) est détecté comme un objet pertinent pour une collision moins critique (2) lorsque le temps jusqu'à la collision prédit est supérieur à une valeur seuil.

4. Procédé d'évitement de collision (400) selon l'une des revendications précédentes,
dans lequel la libération (120) de la réaccélération est effectuée en tant que libération (120) d'une unité de commande d'accélération actionnée par un conducteur du véhicule ou d'un signal de demande d'accélération.

5. Procédé d'évitement de collision (400) selon l'une des revendications précédentes,
dans lequel la limitation de la réaccélération au début de la période de libération est effectuée sur la base d'une vitesse du véhicule.

6. Procédé d'évitement de collision (110) selon l'une des revendications précédentes, qui est mis en œuvre dans un engin de travail mobile en tant que véhicule (1).

7. Unité de calcul, en particulier unité de commande (15), comprenant un processeur qui est configuré de telle sorte qu'il exécute le procédé selon l'une des revendications précédentes.

8. Programme d'ordinateur comprenant des instructions qui, lors de l'exécution du programme d'ordinateur par un ordinateur, amènent l'ordinateur à exécuter le procédé d'évitement de collision (400) selon les revendications 1 à 6.

9. Support de données lisible par ordinateur, sur lequel le programme d'ordinateur selon la revendication 8 est stocké.
